# EUROPEAN PATENT APPLICATION

(11) **EP 4 654 677 A1**
(43) Date of publication of application: **26.11.2025**
(21) Application number: 24744118.1
(22) Date of filing: 09.01.2024
(51) Int. Cl.: H04W 52/02

(54) **METHOD USED IN NODE FOR WIRELESS COMMUNICATION AND APPARATUS**

(30) Priority: 16.01.2023 CN 202310201151
(71) Applicant: Apogee Networks, LLC, Dallas, TX 75201 (US)
(72) Inventor: JIANG, Qi, Shanghai 201206 (CN); ZHANG, Xiaobo, Shanghai 201206 (CN)
(74) Representative: Gunzelmann, Rainer
(86) International application number: PCT/CN2024/071276
(87) International publication number: WO 2024/152942

(57) **Abstract**

Disclosed in the present application are a method used in a node for wireless communication and an apparatus. A node first receives a first information block, the first information block being used for determining a first threshold value; with regard to a wake-up signal in a target wake-up signal set, the node then executes a first-type measurement, the target wake-up signal set comprising at least one wake-up signal; the first-type measurement executed for the wake-up signal in the target wake-up signal set being used for determining a first measurement result, and the relationship between the first measurement result and the first threshold value being used for determining a first time length; in a time interval of which the length is equal to the first time length, the first node at least performs a second-type measurement once, the first-type measurement and the second-type measurement being different; and the first time length being related to an SMTC of the first node. The present application can improve measurement modes in energy saving scenarios, thereby improving the overall performance of systems.

## Description

### Technical Field

The present application relates to a transmission method and apparatus in a wireless communication system, and in particular, to a measurement scheme and apparatus in wireless communication.

### Background Art

As application scenarios of a next-generation wireless communication system become increasingly diversified, different application scenarios have different performance requirements for the system. To meet different performance requirements of various application scenarios, in the 3GPP (3rd Generation Partner Project, 3rd Generation Partner Project) RAN (Radio Access Network, radio access network) #72 plenary meeting, it is decided to study the new radio (NR, New Radio) technology (or 5G). In addition, the WI (Work Item, work item) of the new radio (NR, New Radio) technology is approved at the 3GPP RAN #75 plenary meeting, and standardization work on NR is started.

In the new radio technology, energy consumption is an important indicator to measure performance of the technology. To adapt to various application scenarios and meet different needs, 3GPP has been evolving technologies for reducing energy consumption.

### Summary of the Invention

Among various technologies for reducing energy consumption, it is considered an effective method to wake up a recipient of a user equipment (UE, User Equipment) or network equipment (gNB/eNB) in advance through a wake-up signal. However, in a current NR system, there is a strict definition for layer-3 measurement of the UE. Based on a configuration of a DRX (Discontinuous Reception, discontinuous reception) cycle (Cycle) of the UE, the UE needs to perform, in a specific frequency, intra-frequency or inter-frequency measurement in time domain for cell selection and cell reselection even in an RRC_IDLE or RRC_INACTIVE state. The continuous wake-up and operations of turning on a terminal baseband function brought about by the above measurement inevitably affect an effect of energy saving. Therefore, a method to reduce measurement complexity and power consumption is to perform layer-3 measurement through a wake-up signal. However, when the wake-up signal is used for layer-3 measurement, how to improve measurement accuracy and further reduce a measurement frequency is a problem to be solved.

In view of this, the present application discloses a solution. It should be noted that in the description of the present application, only reducing energy consumption is used as a typical application scenario or example. The wake-up signal in the present application is also applicable to another scenario facing a similar problem (for example, another scenario that requires prewake-up, including but not limited to a capacity enhancement system, a short-range communication system, unlicensed frequency domain communication, IoT (Internet of Things, Internet of Things), a URLLC (Ultra Reliable Low Latency Communication, Ultra Robust Low Latency Communication) network, and Internet of Vehicles), and similar technical effects can be achieved. In addition, the use of a unified solution for different scenarios (including but not limited to scenarios for reducing energy consumption) may further help reduce hardware complexity and costs. In the absence of conflict, embodiments in the first node and features in the embodiments in the present application may be applied to the second node, and vice versa.

In particular, the interpretation of the terms (Terminology), nouns, functions, and variables in the present application (if not specifically stated) can refer to the definitions in the 3GPP specification protocols TS36 series, TS38 series, and TS37 series. If necessary, 3GPP standards TS38.211, TS38.212, TS38.213, TS38.214, TS38.215, TS38.321, TS38.331, TS38.305, TS38.304, and TS37.355 may be referred to assist in understanding the present application.

The present application discloses a method used in a first node for wireless communication, including:
receiving a first information block, where the first information block is used to determine a first threshold value; and
performing first-type measurement for a wake-up signal in a target wake-up signal set, where the target wake-up signal set includes at least one wake-up signal, where
the first-type measurement performed for the wake-up signal in the target wake-up signal set is used to determine a first measurement result, and a relationship between the first measurement result and the first threshold value is used to determine a first time length; the first node performs at least once second-type measurement in a time interval equal to the first time length, and the first-type measurement is different from the second-type measurement; and the first time length is related to SMTC (SS/PBCH Block Measurement Timing Configuration, synchronization signal/physical broadcast channel block measurement timing configuration) of the first node.

As one embodiment, the method is characterized in that by measuring the wake-up signal to determine a value of the first time length, and then determine a periodicity of the second-type measurement based on the value of the first time length, thereby reducing a quantity of measurements per unit time, and improving an effect of energy saving.

According to an aspect of the present application, the first time length is equal to a positive integer time of a DRX cycle length, and the DRX cycle length is used to determine at least one wake-up signal included in the target wake-up signal set.

As one embodiment, the method is characterized in that the first time length, namely, a measurement periodicity, is linked to the DRX cycle, to reduce complexity of implementation.

According to an aspect of the present application, when the relationship between the first measurement result and the first threshold value corresponds to a first relationship, the first time length is equal to a first value; or when the relationship between the first measurement result and the first threshold value corresponds to a second relationship, the first time length is equal to a second value; and the first value is different from the second value; both the first value and the second value are related to the SMTC of the first node; and the first value is K1 times the second value, K1 is a positive integer greater than 1, and a value of the K1 is fixed, or a value of the K1 is configured through high-level signaling.

As one embodiment, the method is characterized in that the first value is K1 times the second value. Therefore, when the first relationship is satisfied, the first time length becomes larger, to achieve a purpose of reducing a quantity of measurement per unit time, and improve an effect of energy saving.

According to an aspect of the present application, the following is included:
sending target information; and
performing channel measurement for a first reference signal, where
the target information is used to determine whether the first node supports the measurement performed for the wake-up signal in the target wake-up signal set; the channel measurement performed for the first reference signal is used to determine a second measurement result; a relationship between the second measurement result and a second threshold value, and the relationship between the first measurement result and the first threshold value, are used together to determine the first time length; a type of the first reference signal is different from a type of the wake-up signal; and the wake-up signal is used to determine whether to monitor a PDCCH in a corresponding paging occasion, and the first reference signal is not used to determine monitoring of the PDCCH.

As one embodiment, the method is characterized in that the channel measurement performed for the first reference signal is a conventional non-WUS (Wake-up Signal, wake-up signal)-based measurement. Therefore, the value of the first time length is determined through two types of measurement: wake-up signal-based measurement and non-wake-up signal-based measurement, to improve measurement accuracy, avoid inaccuracy caused by one type of measurement, and ensure measurement performance.

According to an aspect of the present application, the first measurement result includes an RSSI, and the second measurement result includes at least one of RSRP or RSRQ.

According to an aspect of the present application, the target wake-up signal set includes a first wake-up signal and a second wake-up signal; an identity of the first node is used to determine a first occasion, and the first wake-up signal is used by the first node to determine whether to monitor the PDCCH in the first occasion; and the second wake-up signal is associated with a second occasion, and the first occasion is different from the second occasion.

As one embodiment, the method is characterized in that the wake-up signal corresponding to the first node and a wake-up signal corresponding to a node other than the first node are both used for the first-type measurement, to improve measurement accuracy.

According to an aspect of the present application, the identity of the first node is used for determining an identifier corresponding to a first device group, and the identifier corresponding to the first device group is used for determining the first wake-up signal; an identifier corresponding to a second device group is used for determining the second wake-up signal; the first device group includes at least one terminal, and the first device group includes the first node; and the second device group includes at least one terminal, and the second device group does not include the first node.

As one embodiment, the method is characterized in that wake-up signals for different device groups are all used for measurement, to improve measurement accuracy.

The present application discloses a method used in a second node for wireless communication, including:
sending a first information block, where the first information block is used to determine a first threshold value; and
sending at least one wake-up signal included in a target wake-up signal set, a recipient of the first information block performing measurement for the at least one wake-up signal in the target wake-up signal set,
the first-type measurement performed for the wake-up signal in the target wake-up signal set is used to determine a first measurement result, and a relationship between the first measurement result and the first threshold value is used to determine a first time length; the recipient of the first information block performs at least once second-type measurement in a time interval equal to the first time length, and the first-type measurement is different from the second-type measurement; and the first time length is related to SMTC of a first node.

According to an aspect of the present application, the first time length is equal to a positive integer time of a DRX cycle length, and the DRX cycle length is used to determine at least one wake-up signal included in the target wake-up signal set.

According to an aspect of the present application, when the relationship between the first measurement result and the first threshold value corresponds to a first relationship, the first time length is equal to a first value; or when the relationship between the first measurement result and the first threshold value corresponds to a second relationship, the first time length is equal to a second value; and the first value is different from the second value; both the first value and the second value are related to the SMTC of the first node; and the first value is K1 times the second value, K1 is a positive integer greater than 1, and a value of the K1 is fixed, or a value of the K1 is configured through high-level signaling.

According to an aspect of the present application, the following is included:
receiving target information; and
sending a first reference signal, where
a sender of the target information performs channel measurement for the first reference signal; the target information is used to determine whether the sender of the target information supports the measurement performed for the wake-up signal in the target wake-up signal set; the channel measurement performed for the first reference signal is used to determine a second measurement result; a relationship between the second measurement result and a second threshold value, and the relationship between the first measurement result and the first threshold value, are used together to determine the first time length; a type of the first reference signal is different from a type of the wake-up signal; and the wake-up signal is used to determine whether to monitor a PDCCH in a corresponding paging occasion, and the first reference signal is not used to determine monitoring of the PDCCH.

According to an aspect of the present application, the first measurement result includes an RSSI, and the second measurement result includes at least one of RSRP or RSRQ.

According to an aspect of the present application, the target wake-up signal set includes a first wake-up signal and a second wake-up signal; the recipient of the first information block includes the first node; an identity of the first node is used to determine a first occasion, and the first wake-up signal is used by the first node to determine whether to monitor the PDCCH in the first occasion; and the second wake-up signal is associated with a second occasion, and the first occasion is different from the second occasion.

According to an aspect of the present application, the recipient of the first information block includes the first node; the identity of the first node is used to determine an identifier corresponding to a first device group, and the identifier corresponding to the first device group is used to determine the first wake-up signal; an identifier corresponding to a second device group is used to determine the second wake-up signal; the first device group includes at least one terminal, and the first device group includes the first node; and the second device group includes at least one terminal, and the second device group does not include the first node.

The present application discloses a first node for wireless communication, including:
a first transceiver, receiving a first information block, where the first information block is used to determine a first threshold value; and
a first receiver, performing first-type measurement for a wake-up signal in a target wake-up signal set, where the target wake-up signal set includes at least one wake-up signal, where
the first-type measurement performed for the wake-up signal in the target wake-up signal set is used to determine a first measurement result, and a relationship between the first measurement result and the first threshold value is used to determine a first time length; the first node performs at least once second-type measurement in a time interval equal to the first time length, and the first-type measurement is different from the second-type measurement; and the first time length is related to SMTC of a first node.

The present application discloses a second node for wireless communication, including:
a second transceiver, sending a first information block, where the first information block is used to determine a first threshold value; and
a first transmitter, sending at least one wake-up signal included in a target wake-up signal set, a recipient of the first information block performing measurement on the at least one wake-up signal in the target wake-up signal set,
the first-type measurement performed for the wake-up signal in the target wake-up signal set is used to determine a first measurement result, and a relationship between the first measurement result and the first threshold value is used to determine a first time length; the recipient of the first information block performs at least once second-type measurement in a time interval equal to the first time length, and the first-type measurement is different from the second-type measurement; and the first time length is related to SMTC of a first node.

As one embodiment, the benefits of the solution in the present application lies in that a measurement manner based on a wake-up signal in a network energy saving scenario is optimized, to reduce a quantity of measurement per unit time, namely, a measurement frequency, thereby better reducing energy consumption on a terminal side while ensuring measurement performance, to. improve an effect of energy saving.

### Brief Description of the Drawings

Other features, purposes, and advantages of the present application will become more apparent by reading the detailed description of the non-limiting embodiments with reference to the following drawings:
FIG. 1 is a processing flowchart of a first node according to an embodiment of the present application;
FIG. 2 is a schematic diagram of a network architecture according to an embodiment of the present application;
FIG. 3 is a schematic diagram of an embodiment of a wireless protocol architecture of a user plane and a control plane according to an embodiment of the present application;
FIG. 4 is a schematic diagram of a first communication device and a second communication device according to an embodiment of the present application;
FIG. 5 is a flowchart of a first information block according to an embodiment of the present application;
FIG. 6 is a flowchart of target information according to an embodiment of the present application;
FIG. 7 is a schematic diagram of a target wake-up signal set according to an embodiment of the present application;
FIG. 8 is a schematic diagram of a first time length according to an embodiment of the present application;
FIG. 9 is a schematic diagram of a given wake-up signal and a given occasion according to an embodiment of the present application;
FIG. 10 is a structural block diagram of a processing device in a first node device according to an embodiment of the present application; and
FIG. 11 is a structural block diagram of a processing device in a second node device according to an embodiment of the present application.

### Detailed Description of Embodiments

The technical solution of the present application is further described in detail below in conjunction with the accompanying drawings. It should be noted that, in the absence of conflict, embodiments of the present application and the features in embodiments may be arbitrarily combined with each other.

### Embodiment 1

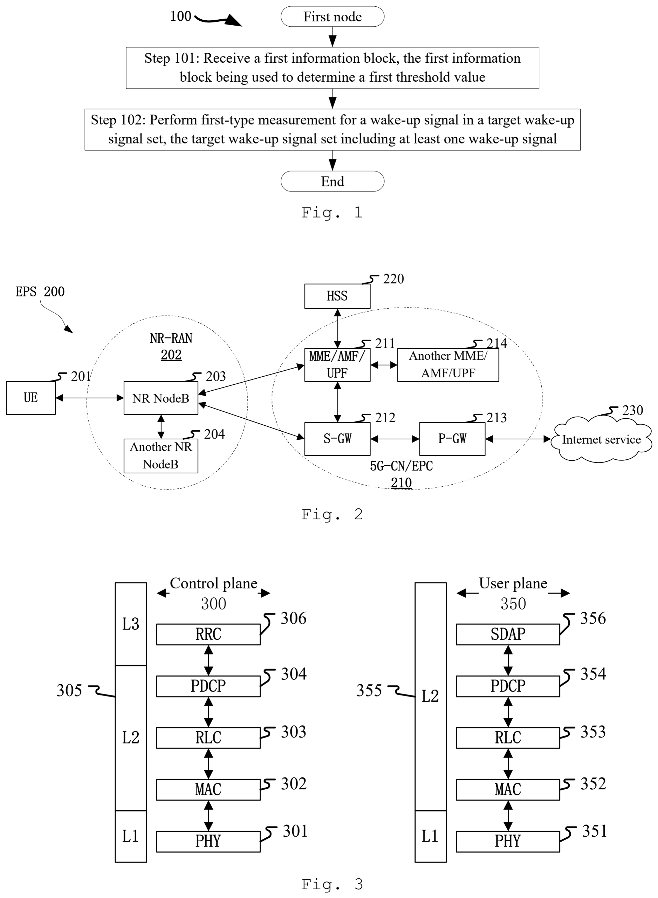

Embodiment 1 illustrates a processing flowchart of a first node, as shown in FIG. 1. In 100 shown in FIG. 1, each block represents a step. In Embodiment 1, the first node in the present application receives a first information block in step 101, and the first information block is used to determine a first threshold value; and first-type measurement is performed in step 102 on a wake-up signal in a target wake-up signal set, where the target wake-up signal set includes at least one wake-up signal.

In Embodiment 1, the first-type measurement performed for the wake-up signal in the target wake-up signal set is used to determine a first measurement result, and a relationship between the first measurement result and the first threshold value is used to determine a first time length; the first node performs at least once second-type measurement in a time interval equal to the first time length, and the first-type measurement is different from the second-type measurement; and the first time length is related to SMTC of the first node.

As one embodiment, step 102 includes receiving at least one wake-up signal in the target wake-up signal set.

As one embodiment, step 102 includes receiving a plurality of wake-up signals in the target wake-up signal set.

As one embodiment, the first information block is transmitted through RRC (Radio Resource Control, radio resource control) signaling.

As one embodiment, the first information block includes a part or all of CellGroupConfig IE (Information Elements, information elements).

As one embodiment, the first information block includes a part or all of fields in CellGroupConfig IE.

As one embodiment, the first information block includes a part or all of SCellConfig IE.

As one embodiment, the first information block includes a part or all of fields in SCellConfig IE.

As one embodiment, the first information block includes a part or all of DRX-Config IE.

As one embodiment, the first information block includes a part or all of fields in DRX-Config IE.

As one embodiment, the first information block includes a part or all of DRX-ConfigSecondaryGroup IE.

As one embodiment, the first information block includes a part or all of fields in DRX-ConfigSecondaryGroup IE.

As one embodiment, the first information block includes a part or all of MAC-CellGroupConfig IE.

As one embodiment, the first information block includes a part or all of fields in MAC-CellGroupConfig IE.

As one embodiment, the first information block includes a part or all of an RRCReconfiguration message.

As one embodiment, the first information block includes a part or all of fields in an RRCReconfiguration message.

As one embodiment, the first information block includes a part or all of a CarrierInfoNR field.

As one embodiment, the first information block includes a part or all of SSB-MTC IE.

As one embodiment, the first information block includes a part or all of fields in SSB-MTC IE.

As one embodiment, the first information block includes a part or all of a Paging message (Message).

As one embodiment, the first information block includes a part or all of fields in SIB1.

As one embodiment, the first information block includes a part or all of fields in SIB2.

As one embodiment, the first information block includes a part or all of fields in SIB3.

As one embodiment, the first information block includes a part or all of fields in SIB4.

As one embodiment, the first information block includes a part or all of fields in SIB5.

As one embodiment, the first information block includes a part or all of fields in ServingCellConfigCommonSIB.

As one embodiment, the first information block includes a part or all of fields in DownlinkConfigCommonSIB.

As one embodiment, the first information block includes a part or all of fields in PCCH-Config.

As one embodiment, the first information block includes a part or all of fields in PagingCycle.

As one embodiment, the first information block includes a part or all of fields in ExtendedPagingCycle.

As one embodiment, a name of RRC signaling carrying the first information block includes DRX.

As one embodiment, a name of RRC signaling carrying the first information block includes Config.

As one embodiment, a name of RRC signaling carrying the first information block includes SSB.

As one embodiment, a name of RRC signaling carrying the first information block includes MTC.

As one embodiment, a name of RRC signaling carrying the first information block includes WUS.

As one embodiment, a name of RRC signaling carrying the first information block includes LP.

As one embodiment, a name of RRC signaling carrying the first information block includes Paging.

As one embodiment, a unit of the first threshold value is dB (decibel).

As one embodiment, a unit of the first threshold value is dBm (millidecibel).

As one embodiment, a unit of the first threshold value is mW (milliwatt).

As one embodiment, the first information block indicates the first threshold value.

As one embodiment, the first information block explicitly indicates the first threshold value.

As one embodiment, the first information block implicitly indicates the first threshold value.

As one embodiment, the first information block indicates a target value, and the target value is used to determine the first threshold value.

As one embodiment, the target wake-up signal set includes K1 wake-up signals, and the K1 is a positive integer greater than 1.

As one embodiment, any one wake-up signal in the target wake-up signal set includes an LP (Low Power, low power) WUS (Wake-Up Signal, wake-up signal).

As one embodiment, at least one of the wake-up signals in the target wake-up signal set includes an LP WUS.

As one embodiment, any one wake-up signal in the target wake-up signal set includes a WUS.

As one embodiment, at least one of the wake-up signals in the target wake-up signal set includes a WUS.

As one embodiment, the first-type measurement includes energy monitoring.

As one embodiment, the first-type measurement includes signal monitoring.

As one embodiment, the first-type measurement includes coherent detection.

As one embodiment, the first-type measurement includes layer-3 measurement.

As one embodiment, the first-type measurement includes measurement of intra-frequency NR cells.

As one embodiment, the first-type measurement includes measurement of inter-frequency NR cells.

As one embodiment, the first-type measurement includes evaluation and measurement of a serving cell.

As one embodiment, the first-type measurement includes intra-cell measurement.

As one embodiment, the first-type measurement includes inter-cell measurement.

As one embodiment, the first-type measurement is for cell selection.

As one embodiment, the first-type measurement is for a serving cell.

As one embodiment, the first measurement result is used for cell selection.

As one embodiment, the first measurement result includes a measurement value of the serving cell.

As one embodiment, the first measurement result includes an RSSI (Received Signal Strength Indicator, received signal strength indicator).

As one embodiment, the first measurement result includes energy.

As one embodiment, the first measurement result includes RSRP (Reference Signal Receiving Power, reference signal receiving power).

As one embodiment, the first measurement result includes dBm.

As one embodiment, the first measurement result is filtered to generate a layer-3 measurement result.

As one embodiment, the first measurement result includes a cell selection receive level value (Cell Selection RX Level Value).

As one embodiment, the first measurement result includes a cell selection quality value (Cell Selection Quality Value).

As one embodiment, the relationship between the first measurement result and the first threshold value includes a relative magnitude between the first measurement result and the first threshold value.

As one sub-embodiment of this embodiment, when the first measurement result is greater than the first threshold value, the first time length is equal to a first value; otherwise, the first time length is equal to a second value.

As one sub-embodiment of this embodiment, when the first measurement result is greater than the first threshold value for duration meeting a target time threshold, the first time length is equal to a first value; otherwise, the first time length is equal to a second value.

As one embodiment, the relationship between the first measurement result and the first threshold value includes a relative magnitude between the first threshold value and a difference obtained by subtracting the first measurement result from a first reference value.

As one sub-embodiment of this embodiment, when the difference obtained by subtracting the first measurement result from the first reference value is less than the first threshold value, the first time length is equal to a first value; otherwise, the first time length is equal to a second value.

As one sub-embodiment of this embodiment, when the difference obtained by subtracting the first measurement result from the first reference value is less than the first threshold value for duration meeting a target time threshold, the first time length is equal to the first value; otherwise, the first time length is equal to a second value.

As one embodiment, the first reference value in the present application is configured through RRC signaling.

As one embodiment, the first reference value in the present application is fixed.

As one embodiment, the first reference value in the present application is configured through the first information block.

As one embodiment, the unit of the first threshold value includes dB.

As one embodiment, the unit of the first threshold value includes dBm.

As one embodiment, a unit of the first time length is milliseconds.

As one embodiment, a unit of the first time length is seconds.

As one embodiment, the first time length includes a quantity of a positive integer greater than 1 of slots.

As one embodiment, a unit of the first value is milliseconds.

As one embodiment, the first value corresponds to a quantity of a positive integer greater than 1 of slots.

As one embodiment, a unit of the second value is milliseconds.

As one embodiment, the second value includes a quantity of a positive integer greater than 1 of slots.

As one embodiment, the first time length corresponds to T_{detect,NR_Intra}.

As one embodiment, the first time length corresponds to T_{measure,NR_Intra}.

As one embodiment, the first time length corresponds to T_{evaluate,NR_Intra}.

As one embodiment, duration of the time interval equal to the first time length is equal to T_{detect,NR_Intra}.

As one embodiment, duration of the time interval equal to the first time length is equal to T_{measure,NR_Intra}.

As one embodiment, duration of the time interval equal to the first time length is equal to T_{evaluate,NR_Intra}.

As one embodiment, the second-type measurement is for cell reselection.

As one embodiment, the second-type measurement is for measurement of SS-RSRP (Synchronization Signal based Reference Signal Received Power, synchronization signal based reference signal received power) and SS-RSRQ (Synchronization Signal based Reference Signal Received Quality, synchronization signal based reference signal received quality).

As one embodiment, the second-type measurement is for measurement of SS-SINR (Synchronization Signal based Signal to Noise and Interference Ratio, synchronization sgnal based signal to noise and interference ratio).

As one embodiment, the first node can evaluate, in the time interval equal to the first time length, whether a new detectable intra-frequency cell meets a reselection criteria.

As one embodiment, the first node needs to measure SS-RSRP and SS-RSRQ for intra-frequency (Intra-Frequency) cells (Cells) at least in each time interval whose length is equal to the first time length.

As one embodiment, the first node needs to perform at least twice measurement for filtered SS-RSRP and SS-RSRP for each measured intra-frequency cell. RSRQ is measured, and in a measurement set (Set) used for filtering, an interval between the two times of measurement is at least not less than half of the first time length.

As one embodiment, for an intra-frequency cell that is detected but not selected, the first node can evaluate, in a time interval equal to the first time length, whether the intra-frequency cell satisfies a reselection criteria.

As one embodiment, the first time length is equal to a positive integer time of the SMTC of the first node.

As one embodiment, the first time length is equal to a positive integer greater than 1 time of the SMTC of the first node.

As one embodiment, the first time length is linearly related to the SMTC of the first node.

As one embodiment, a length of the SMTC of the first node is used to determine the first time length.

As one sub-embodiment of this embodiment, when the length of the SMTC of the first node is greater than a given time length, the first time length is equal to a first candidate length; or when the length of the SMTC of the first node is not greater than a given time length, the first time length is equal to a second candidate length; and the first candidate length is different from the second candidate length.

As a dependent embodiment of this sub-embodiment, the first candidate length and the second candidate length are both positive integer times greater than 1 of a DRX cycle of the first node.

As a dependent embodiment of this sub-embodiment, the first candidate length is M1 times a DRX cycle of the first node, the second candidate length is M2 times the DRX cycle of the first node, M1 is not equal to M2, and M1 and M2 are both positive integers greater than 1.

As one embodiment, the first-type measurement and the second-type measurement are for different measurement purposes.

As one embodiment, the first-type measurement and the second-type measurement correspond to different measurement results.

### Embodiment 2

Embodiment 2 illustrates a schematic diagram of a network architecture, as shown in FIG. 2.

FIG. 2 illustrates a diagram of a network architecture 200 of a 5G NR, LTE (Long-Term Evolution, long-term evolution), and LTE-A (Long-Term Evolution Advanced, long-term evolution advanced) system. The 5G NR or LTE network architecture 200 may be referred to as an EPS (Evolved Packet System, evolved packet system) 200 or another suitable term. The EPS 200 may include a UE (User Equipment) 201, an NR-RAN (next generation radio access network) 202, an EPC (Evolved Packet Core, evolved packet core)/5G-CN (5G-Core Network, 5G-core network) 210, an HSS (Home Subscriber Server, home subscriber server) 220, and an Internet service 230. The EPS may be interconnected with another access network, but these entities/interfaces are not shown for simplicity. As shown in the figure, the EPS provides a packet-switching service. However, a person skilled in the art may readily appreciate that the various concepts presented throughout the present application may be extended to a network providing a circuit-switching service or another cellular network. The NR-RAN includes an NR NodeB (gNB) 203 and another gNB 204. The gNB 203 provides user and control plane protocol termination toward the UE 201. The gNB 203 may be connected to the another gNB 204 via an Xn interface (for example, backhaul). The gNB 203 may also be referred to as a base station, a base transceiver station, a radio base station, a radio transceiver, a transceiver function, a basic service set (BSS), an extended service set (ESS), a TRP (transmit receive node), or another suitable term. The gNB 203 provides an access point to the EPC/5G-CN 210 for the UE 201. An example of the UE 201 includes a cellular phone, a smart phone, a session initiation protocol (SIP) phone, a laptop, a personal digital assistant (PDA), a satellite radio, non-terrestrial base station communication, satellite mobile communication, a global positioning system, a multimedia apparatus, a video apparatus, a digital audio player (for example, an MP3 player), a camera, a game console, a drone, aircraft, a narrowband Internet of Things device, a machine type communication device, a land vehicle, an automobile, a wearable device, or any other similarly functional apparatus. A person skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or another suitable term. The gNB 203 is connected to the EPC/5G-CN 210 via an S1/NG interface. The EPC/5G-CN 210 includes an MME (Mobility Management Entity, mobility management entity)/AMF (Authentication Management Field, authentication management field)/UPF (User Plane Function, user plane function) 211, another MME/AMF/UPF 214, an S-GW (Service Gateway, service gateway) 212, and a P-GW (Packet Data Network Gateway, packet data network gateway) 213. The MME/AMF/UPF 211 is a control node that handles signaling between the UE 201 and the EPC/5G-CN 210. Basically, the MME/AMF/UPF 211 provides bearer and connection management. All user IP (Internet Protocol, Internet protocol) packets are transmitted through the S-GW 212, and the S-GW 212 is connected to the P-GW 213. The P-GW 213 provides UE IP address allocation and another function. The P-GW 213 is connected to the Internet service 230. The Internet service 230 includes an operatorcorresponding Internet protocol service, and may specifically include the Internet, the intranet, an IMS (IP Multimedia Subsystem, IP multimedia subsystem), and a packet switching streaming service.

As one embodiment, the UE 201 corresponds to the first node in the present application.

As one embodiment, the UE 201 supports Energy Saving on a terminal side.

As one embodiment, the UE 201 supports receiving of an LP WUS.

As one embodiment, the UE 201 supports layer-3 measurement through an LP WUS.

As one embodiment, the NR NodeB corresponds to the second node in the present application.

As one embodiment, the NR NodeB supports Energy Saving on a terminal side.

As one embodiment, the NR NodeB supports sending of an LP WUS.

As one embodiment, the NR NodeB supports reporting of layer-3 measurement through the LP WUS.

As one embodiment, the NR NodeB is a base station.

As one embodiment, the NR NodeB is a cell.

As one embodiment, the NR NodeB includes a plurality of cells.

As one embodiment, the first node in the present application corresponds to the UE 201, and the second node in the present application corresponds to the NR NodeB.

### Embodiment 3

Embodiment 3 shows a schematic diagram of an embodiment of a wireless protocol architecture of a user plane and a control plane according to the present application, as shown in FIG. 3. FIG. 3 is a schematic diagram illustrating an embodiment of radio protocol architectures of a user plane 350 and a control plane 300. FIG. 3 shows a radio protocol architecture of the control plane 300 between a first communication node device (a UE, a gNB, or an RSU in V2X) and a second communication node device (a gNB, a UE, or an RSU in V2X) with three layers: a layer 1, a layer 2, and a layer 3. The layer 1 (L1 layer) is the lowest layer and implements various PHY (physical layer) signal processing functions. The L1 layer is referred to as a PHY 301 in this specification. The layer 2 (L2 layer) 305 is above the PHY 301 and is responsible for a link that is between the first communication node device and the second communication node device and that passes through the PHY 301. The L2 layer 305 includes a MAC (Medium Access Control, media access control) sublayer 302, an RLC (Radio Link Control, radio link control protocol) sublayer 303, and a PDCP (Packet Data Convergence Protocol, packet data convergence protocol) sublayer 304. These sublayers are terminated at the second communication node device. The PDCP sublayer 304 provides multiplexing between different radio bearers and logical channels. The PDCP sublayer 304 further provides security by encrypting a data packet, and the PDCP sublayer 304 further provides inter-zone mobility support for the first communication node device to the second communication node device. The RLC sublayer 303 provides segmentation and reassembly of an upper layer data packet, retransmission of a lost data packet, and reordering of data packets to compensate for out-of-order receiving due to an HARQ. The MAC sublayer 302 provides multiplexing between logical and transmit channels. The MAC sublayer 302 is further responsible for allocating various radio resources (for example, resource blocks) in one cell between the first communication node devices. The MAC sublayer 302 is further responsible for an HARQ operation. An RRC (Radio Resource Control, radio resource control) sublayer 306 in the layer 3 (L3 layer) in the control plane 300 is responsible for obtaining a radio resource (namely, a radio bearer) and configuring a lower layer by using RRC signaling between the second communication node device and the first communication node device. A radio protocol architecture of the user plane 350 includes a layer 1 (L1 layer) and a layer 2 (L2 layer). The radio protocol architecture for the first communication node device and the second communication node device in the user plane 350 is substantially the same as the corresponding layers and sublayers in the control plane 300 in terms of a physical layer 351, a PDCP sublayer 354 in the L2 layer 355, an RLC sublayer 353 in the L2 layer 355, and a MAC sublayer 352 in the L2 layer 355. However, the PDCP sublayer 354 further provides header compression for an upper layer data packet to reduce radio transmission overhead. The L2 layer 355 in the user plane 350 further includes an SDAP (Service Data Adaptation Protocol, service data adaptation protocol) sublayer 356, and the SDAP sublayer 356 is responsible for mapping between a QoS flow and a data radio bearer (DRB, Data Radio Bearer) to support diversity of services. Although not shown in the figure, the first communication node device may include several upper layers above the L2 layer 355, including a network layer (for example, an IP layer) terminated at a P-GW on a network side and an application layer terminated at another end (for example, a remote UE and a server) of a connection.

As one embodiment, the wireless protocol architecture in FIG. 3 is applicable to the first node in the present application.

As one embodiment, the wireless protocol architecture in FIG. 3 is applicable to the second node in the present application.

As one embodiment, the PDCP 304 of the second communication node device is used to generate scheduling of the first communication node device.

As one embodiment, the PDCP 354 of the second communication node device is used to generate scheduling of the first communication node device.

As one embodiment, the first information block is generated in the RRC 306.

As one embodiment, the first information block is generated in the MAC 302 or the MAC 352.

As one embodiment, the wake-up signal in the target wake-up signal set is generated in the MAC 302 or the MAC 352.

As one embodiment, the wake-up signal in the target wake-up signal set is generated in the PHY 301 or the PHY 351.

As one embodiment, the target information is generated in the RRC 306.

As one embodiment, the target information is generated in the MAC 302 or the MAC 352.

As one embodiment, the target information is generated in the PHY 301 or the PHY 351.

As one embodiment, the first reference signal is generated in the MAC 302 or the MAC 352.

As one embodiment, the first reference signal is generated in the PHY 301 or the PHY 351.

As one embodiment, the first node is a terminal.

As one embodiment, the first node is a relay.

As one embodiment, the second node is a relay.

As one embodiment, the second node is a base station.

As an embodiment, the second node is a gNB.

As an embodiment, the second node is a TRP (Transmitter Receiver Point, transmitter receiver point).

As one embodiment, the second node is used to manage a plurality of TRPs.

As one embodiment, the second node is a node used to manage a plurality of cells.

As one embodiment, the third node is a relay.

As one embodiment, the third node is a base station.

As one embodiment, the third node is a gNB.

As one embodiment, the third node is a TRP.

As one embodiment, the third node is used to manage a plurality of TRPs.

As one embodiment, the third node is a node used to manage a plurality of cells.

As one embodiment, the third node is an adjacent node of the second node.

As one embodiment, the third node is an adjacent base station of the second node.

### Embodiment 4

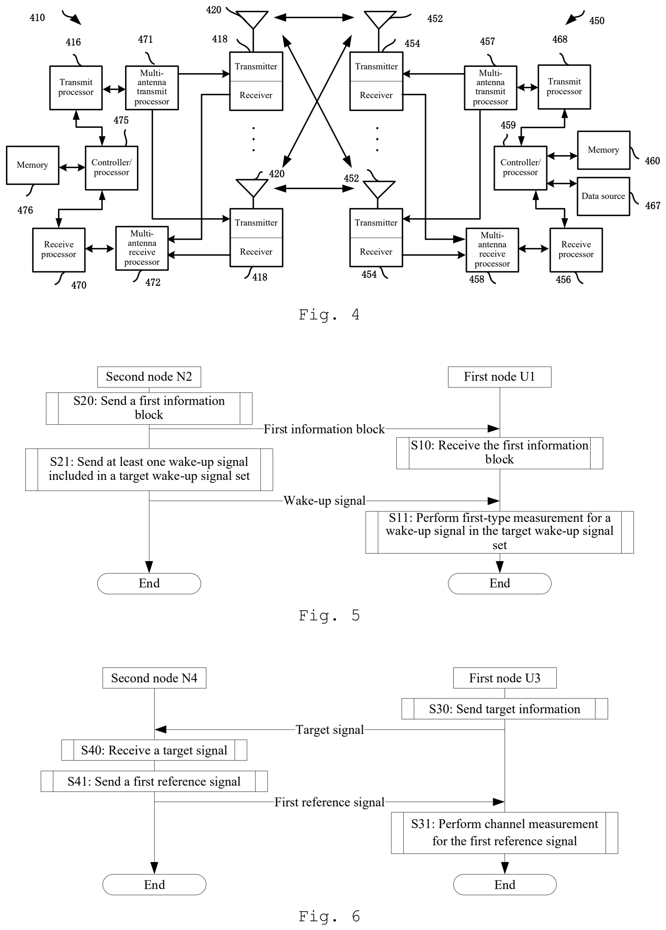

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 includes a controller/processor 459, a memory 460, a data source 467, a transmit processor 468, a receive processor 456, a multi-antenna transmit processor 457, a multi-antenna receive processor 458, a transmitter/receiver 454 and an antenna 452.

The second communication device 410 includes a controller/processor 475, a memory 476, a receive processor 470, a transmit processor 416, a multi-antenna receive processor 472, a multi-antenna transmit processor 471, a transmitter/receiver 418, and an antenna 420.

In transmission from the second communication device 410 to the first communication device 450, at the second communication device 410, an upper layer data packet from a core network is provided to the controller/processor 475. The controller/processor 475 implements functionality of an L2 layer. In transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is further responsible for retransmission of a lost packet and signaling to the first communication device 450. The transmit processor 416 and the multi-antenna transmit processor 471 implement various signal processing functions for an L1 layer (namely, a physical layer). The transmit processor 416 implements encoding and interleaving to facilitate forward error correction (FEC) at the second communication device 410, and mapping of signal constellations based on various modulation schemes (for example, binary phase shift keying (BPSK), quadrature phase shift keying (QPSK), M-phase shift keying (M-PSK), and M-quadrature amplitude modulation (M-QAM)). The multi-antenna transmit processor 471 performs, on a coded and modulated symbol, digital spatial precoding including codebook-based precoding and non-codebook-based precoding and beamforming processing, to generate one or more spatial streams. The transmit processor 416 then maps each spatial stream to a subcarrier for multiplexing with a reference signal (for example, pilot) in time domain and/or frequency domain, and then generates, through inverse fast Fourier transform (IFFT), a physical channel carrying a time-domain multi-carrier symbol stream. The multi-antenna transmit processor 471 then performs an operation of sending analog precoding/beamforming on the time-domain multi-carrier symbol stream. Each transmitter 418 converts a baseband multi-carrier symbol stream provided by the multi-antenna transmit processor 471 into a radio frequency stream, and then provides the radio frequency stream to different antennas 420.

In transmission from the second communication device 410 to the first communication device 450, at the first communication device 450, each receiver 454 receives a signal through an antenna 452 corresponding to the receiver 454. Each receiver 454 recovers information modulated onto a radio frequency carrier, and converts a radio frequency stream into a baseband multi-carrier symbol stream to provide the baseband multi-carrier symbol to the receive processor 456. The receive processor 456 and the multi-antenna receive processor 458 implement various signal processing functions of the L1 layer. The multi-antenna receive processor 458 performs an operation of receiving analog precoding/beamforming on the baseband multi-carrier symbol stream from the receiver 454. The receive processor 456 converts, through fast Fourier transform (FFT), the baseband multi-carrier symbol stream after the operation of receiving analog precoding/beamforming from time domain to frequency domain. In frequency domain, a physical layer data signal and a reference signal are detimexed by the receive processor 456, where the reference signal is used for channel estimation, and the data signal is recovered to obtain any spatial stream destined for the first communication device 450 after multi-antenna detection in the multi-antenna receive processor 458. A symbol on each spatial stream is demodulated and recovered in the receive processor 456, to generate a soft decision. The receive processor 456 then decodes and deinterleaves the soft decision to recover upper layer data and a control signal that are transmitted by the second communication device 410 on a physical channel. The upper layer data and the control signal are then provided to the controller/processor 459. The controller/processor 459 implements a function of the L2 layer. The controller/processor 459 may be associated with the memory 460 that stores program code and data. The memory 460 may be referred to as a computer-readable medium. In transmission from the second communication device 410 to the second communication device 450, the controller/processor 459 provides demultiplexing between transport and logical channels, packet reassembly, decryption, header decompression, and control signal processing to recover an upper layer data packet from the core network. The upper layer data packet is then provided to all protocol layers above the L2 layer. Various control signals may further be provided to L3 for L3 to process.

In transmission from the first communication device 450 to the second communication device 410, at the first communication device 450, the upper layer data packet is provided to the controller/processor 459 through the data source 467. The data source 467 represents all protocol layers above the L2 layer. Similar to a transmission function at the second communication device 410 that is described in transmission from the second communication device 410 to the first communication device 450, the controller/processor 459 implements header compression, encryption, packet segmentation and reordering, and multiplexing between logical and transport channels based on radio resource allocation, to implement L2 layer functions for the user plane and the control plane. The controller/processor 459 is further responsible for retransmission of a lost packet, and signaling to the second communication device 410. The transmit processor 468 performs modulation mapping and channel coding processing, and the multi-antenna transmit processor 457 performs digital multi-antenna spatial precoding including codebook-based precoding and non-codebook-based precoding, and beamforming processing. Then, the transmission processor 468 modulates a generated spatial stream into a multi-carrier/single-carrier symbol stream, and the multi-carrier/single-carrier symbol stream is provided to different antennas 452 through the transmitter 454 after an analog precoding/beamforming operation in the multi-antenna transmit processor 457. Each transmitter 454 first converts a baseband symbol stream provided by the multi-antenna transmit processor 457 into a radio frequency symbol stream, and then provides the radio frequency symbol stream to the antenna 452.

In transmission from the first communication device 450 to the second communication device 410, a function at the second communication device 410 is similar to a receive function at the first communication device 450 that is described in transmission from the second communication device 410 to the first communication device 450. Each receiver 418 receives a radio frequency signal through an antenna 420 corresponding to the receiver 418, converts the received radio frequency signal into a baseband signal, and then provides the baseband signal to the multi-antenna receive processor 472 and the receive processor 470. The receive processor 470 and the multi-antenna receive processor 472 jointly implement a function of the L1 layer. The controller/processor 475 implements a function of the L2 layer. The controller/processor 475 may be associated with the memory 476 that stores program code and data. The memory 476 may be referred to as a computer-readable medium. In transmission from the first communication device 450 to the second communication device 410, the controller/processor 475 provides demultiplexing between transport and logical channels, packet reassembly, decryption, header decompression, and control signal processing to recover an upper layer data packet from the UE 450. The upper layer data packet from the controller/processor 475 can be provided to the core network.

As one embodiment, the first communication device 450 apparatus includes: at least one processor and at least one memory. The at least one memory includes computer program code, where the at least one memory and the computer program code are configured to be used with the at least one processor. The first communication device 450 apparatus at least first receives a first information block, where the first information block is used to determine a first threshold value; and then performs first-type measurement for a wake-up signal in a target wake-up signal set, where the target wake-up signal set includes at least one wake-up signal, where the first-type measurement performed for the wake-up signal in the target wake-up signal set is used to determine a first measurement result, and a relationship between the first measurement result and the first threshold value is used to determine a first time length; the first node performs at least once second-type measurement in a time interval equal to the first time length, and the first-type measurement is different from the second-type measurement; and the first time length is related to SMTC of a first node.

As one embodiment, the first communication device 450 includes a memory storing a computer-readable instruction program, where the computer-readable instruction program generates an action when being executed by at least one processor, and the action includes: first receiving a first information block, where the first information block is used to determine a first threshold value; and then performs first-type measurement for a wake-up signal in a target wake-up signal set, where the target wake-up signal set includes at least one wake-up signal, where the first-type measurement performed for the wake-up signal in the target wake-up signal set is used to determine a first measurement result, and a relationship between the first measurement result and the first threshold value is used to determine a first time length; the first node performs at least once second-type measurement in a time interval equal to the first time length, and the first-type measurement is different from the second-type measurement; and the first time length is related to SMTC of a first node.

As one embodiment, the second communication device 410 apparatus includes: at least one processor and at least one memory, where the at least one memory includes a computer program code; and the at least one memory and the computer program code are configured to be used with the at least one processor. The second communication device 410 apparatus at least first sends a first information block, where the first information block is used to determine a first threshold value; and then sends at least one wake-up signal included in the target wake-up signal set, where a recipient of the first information block performs measurement for the at least one wake-up signal in the target wake-up signal set; the first-type measurement performed for the wake-up signal in the target wake-up signal set is used to determine a first measurement result, and a relationship between the first measurement result and the first threshold value is used to determine a first time length; the recipient of the first information block performs at least once second-type measurement in a time interval equal to the first time length, and the first-type measurement is different from the second-type measurement; and the first time length is related to SMTC of a first node.

As one embodiment, the second communication device 410 includes a memory storing a computer-readable instruction program, where the computer-readable instruction program generates an action when being executed by at least one processor, and the action includes: first sending a first information block, where the first information block is used to determine a first threshold value; and then sends at least one wake-up signal included in the target wake-up signal set, where a recipient of the first information block performs measurement for the at least one wake-up signal in the target wake-up signal set; the first-type measurement performed for the wake-up signal in the target wake-up signal set is used to determine a first measurement result, and a relationship between the first measurement result and the first threshold value is used to determine a first time length; the recipient of the first information block performs at least once second-type measurement in a time interval equal to the first time length, and the first-type measurement is different from the second-type measurement; and the first time length is related to SMTC of a first node.

As one embodiment, the first communication device 450 corresponds to the first node in the present application.

As one embodiment, the second communication device 410 corresponds to the second node in the present application.

As one embodiment, the first communication device 450 is a UE.

As one embodiment, the first communication device 450 is a terminal.

As one embodiment, the first communication device 450 is a relay.

As one embodiment, the second communication device 410 is a base station.

As one embodiment, the second communication device 410 is a relay.

As one embodiment, the second communication device 410 is a network device.

As one embodiment, the second communication device 410 is a serving cell.

As one embodiment, the second communication device 410 is a TRP.

As one embodiment, at least the first four of the antenna 452, the receiver 454, the multi-antenna receive processor 458, the receive processor 456, and the controller/processor 459 are used to receive the first information block; and at least the first four of the antenna 420, the transmitter 418, the multi-antenna transmit processor 471, the transmit processor 416, and the controller/processor 475 are used to send the first information block.

As one embodiment, at least the first four of the antenna 452, the receiver 454, the multi-antenna receive processor 458, the receive processor 456, and the controller/processor 459 are used to perform measurement for the wake-up signal in the target wake-up signal set; and at least the first four of the antenna 420, the transmitter 418, the multi-antenna transmit processor 471, the transmit processor 416, and the controller/processor 475 are used to send at least one wake-up signal included in the target wake-up signal set.

As one embodiment, at least the first four of the antenna 452, the transmitter 454, the multi-antenna transmit processor 457, the transmit processor 468, and the controller/processor 459 are used to send target information; and at least the first four of the antenna 420, the receiver 418, the multi-antenna receive processor 472, the receive processor 470, and the controller/processor 475 are used to receive the target information.

As one embodiment, at least the first four of the antenna 452, the receiver 454, the multi-antenna receive processor 458, the receive processor 456, and the controller/processor 459 are used to perform channel measurement for a first reference signal; and at least the first four of the antenna 420, the transmitter 418, the multi-antenna transmit processor 471, the transmit processor 416, and the controller/processor 475 are used to send the first reference signal.

### Embodiment 5

Embodiment 5 illustrates a flowchart of a first information block, as shown in FIG. 5. In FIG. 5, a first node U1 communicates with a second node N2 through a wireless link. It is particularly noted that the order in this embodiment does not limit a signal transmission order and an implementation order in the present application. In the absence of conflict, the embodiments, sub-embodiments, and dependent embodiments in Embodiment 5 may be applied to Embodiment 6. Conversely, in the absence of conflict, any embodiment, sub-embodiment, and dependent embodiment in Embodiment 6 may be applied to Embodiment 5.

For **the first node U1,** the first information block is received in step S10; and in step S11, first-type measurement is performed for a wake-up signal in a target wake-up signal set.

For the **second node N2,** the first information block is sent in step S20; and at least one wake-up signal included in the target wake-up signal set is sent in step S21.

In Embodiment 5, the first information block is used to determine a first threshold value. the target wake-up signal set includes at least one wake-up signal; the first-type measurement performed for the wake-up signal in the target wake-up signal set is used to determine a first measurement result, and a relationship between the first measurement result and the first threshold value is used to determine a first time length; the first node performs at least once second-type measurement in a time interval equal to the first time length, and the first-type measurement is different from the second-type measurement; and the first time length is related to SMTC of a first node.

As one embodiment, step S11 includes performing the first-type measurement for at least one wake-up signal in the target wake-up signal set.

As one embodiment, step S11 includes performing the first-type measurement for a plurality of wake-up signals in the target wake-up signal set.

As one embodiment, step S11 includes receiving the at least one wake-up signal in the target wake-up signal set.

As one embodiment, step S11 includes receiving the plurality of wake-up signals in the target wake-up signal set.

As one embodiment, step S21 includes sending the plurality of wake-up signals included in the target wake-up signal set.

Typically, the first time length is equal to a positive integer time of a length of a DRX cycle, and the length of the DRX cycle is used to determine at least one wake-up signal included in the target wake-up signal set.

As one embodiment, the first time length is equal to a positive integer greater than 1 time of the length of the DRX cycle.

As one embodiment, the DRX cycle corresponds to a DRX cycle of the first node.

As one embodiment, the DRX cycle corresponds to a DRX cycle of a device in a first device group, all devices in the first device group are configured with the same DRX cycle, and the first device group includes the first node.

As one embodiment, the length of the DRX cycle is used to determine a periodicity of the wake-up signal included in the target wake-up signal set.

As one embodiment, the length of the DRX cycle is used to determine a time interval between two adjacent wake-up signals included in the target wake-up signal set.

As one embodiment, the length of the DRX cycle is used to determine a time interval between at least two wake-up signals included in the target wake-up signal set.

Typically, when the relationship between the first measurement result and the first threshold value corresponds to a first relationship, the first time length is equal to a first value; or when the relationship between the first measurement result and the first threshold value corresponds to a second relationship, the first time length is equal to a second value; and the first value is different from the second value; both the first value and the second value are related to the SMTC of the first node; and the first value is K1 times of the second value, K1 is a positive integer greater than 1, and a value of the K1 is fixed, or a value of the K1 is configured through high-level signaling.

As one embodiment, meaning of "the relationship between the first measurement result and the first threshold value corresponds to a first relationship" includes: The first measurement result is greater than the first threshold value; and meaning of "the relationship between the first measurement result and the first threshold value corresponds to a second relationship" includes: The first measurement result is not greater than the first threshold value.

As one embodiment, meaning of "the relationship between the first measurement result and the first threshold value corresponds to a first relationship" include: The first measurement result is greater than the first threshold value for duration meeting a target time threshold; and meaning of "the relationship between the first measurement result and the first threshold value corresponds to a second relationship" includes: The first measurement result is not greater than the first threshold value or the first measurement result is greater than the first threshold value for duration not meeting the target time threshold.

As one embodiment, meaning of "the relationship between the first measurement result and the first threshold value corresponds to a first relationship" includes: A difference obtained by subtracting the first measurement result from a first reference value is less than the first threshold value; and meaning of "the relationship between the first measurement result and the first threshold value corresponds to a second relationship" includes: The difference obtained by subtracting the first measurement result from the first reference value is not less than the first threshold value.

As one embodiment, meaning of "the relationship between the first measurement result and the first threshold value corresponds to a first relationship" includes: The difference obtained by subtracting the first measurement result from the first reference value is less than the first threshold value for duration meeting a target time threshold; and meaning of "the relationship between the first measurement result and the first threshold value corresponds to a second relationship" includes: The difference obtained by subtracting the first measurement result from the first reference value is not less than the first threshold value or the difference obtained by subtracting the first measurement result from the first reference value is less than the first threshold value for duration not meeting the target time threshold.

As one embodiment, a unit of the first value is seconds.

As one embodiment, a unit of the first value is milliseconds.

As one embodiment, a unit of the second value is seconds.

As one embodiment, a unit of the second value is milliseconds.

Typically, the first measurement result includes RSSI, and the second measurement result includes at least one of RSRP or RSRQ.

Typically, the target wake-up signal set includes a first wake-up signal and a second wake-up signal; an identity of the first node is used to determine a first occasion, and the first wake-up signal is used by the first node to determine whether to monitor the PDCCH in the first occasion; and the second wake-up signal is associated with a second occasion, and the first occasion is different from the second occasion.

As one embodiment, a position of a time domain resource occupied by the first wake-up signal is related to a position of a time domain resource occupied by the first occasion.

As one sub-embodiment of this embodiment, the position of the time domain resource occupied by the first wake-up signal is used for determining the position of the time domain resource occupied by the first occasion.

As one sub-embodiment of this embodiment, the position of the time domain resource occupied by the first occasion is used for determining the position of the time domain resource occupied by the first wake-up signal.

As one sub-embodiment of this embodiment, a time interval between the position of the time domain resource occupied by the first wake-up signal and the time domain resource occupied by the first occasion is fixed, or is configured through RRC signaling.

As one embodiment, the target wake-up signal set includes K1 wake-up signals, the K1 is a positive integer greater than 1, the K1 wake-up signals include the first wake-up signal and the second wake-up signal, the first wake-up signal is related to the first node, and the second wake-up signal is related to a terminal other than the first node.

As one sub-embodiment of this embodiment, the first wake-up signal is related to the first occasion, and the first occasion is a PO (Paging Occasion, paging occasion) corresponding to the first node.

As one sub-embodiment of this embodiment, the second wake-up signal is related to the terminal other than the first node, and the second occasion is a PO corresponding to the terminal other than the first node.

As one embodiment, the second occasion is used by a terminal other than the first node to determine whether to monitor the PDCCH in the second occasion.

As one embodiment, the second occasion is not used by the first node to determine whether to monitor the PDCCH in the first occasion.

As one embodiment, the ID of the first node is associated with the first wake-up signal.

As one embodiment, the ID of the first node is related to a time domain resource occupied by the first wake-up signal.

As one sub-embodiment of this embodiment, the ID of the first node is a UE_ID of the first node.

As one sub-embodiment of this embodiment, the ID of the first node is a 5G-S-TMSI of the first node.

As one sub-embodiment of this embodiment, the ID of the first node is a value obtained by taking a 5G-S-TMSI of the first node modulo 4096.

As one sub-embodiment of this embodiment, the ID of the first node is a value obtained by taking a 5G-S-TMSI of the first node modulo 1024.

As one sub-embodiment of this embodiment, the ID of the first node is an identifier of the first node.

As one sub-embodiment of this embodiment, the ID of the first node is the identity of the first node.

As one embodiment, an ID of the terminal other than the first node is related to a time domain resource occupied by the second wake-up signal.

As one embodiment, meaning of the above-mentioned feature "the second wake-up signal is associated with a second occasion" includes: The time domain resource occupied by the second wake-up signal includes the second occasion.

As one embodiment, meaning of the above-mentioned feature "the second wake-up signal is associated with a second occasion" includes: The time domain resource occupied by the second wake-up signal includes the PO of the terminal other than the first node, and the second occasion belongs to the PO of the terminal other than the first node.

As one embodiment, meaning of the above-mentioned feature "the second wake-up signal is associated with a second occasion" includes: A time interval between the time domain resource occupied by the second wake-up signal and the second occasion is fixed, or is configured through RRC signaling.

As one embodiment, meaning of the above-mentioned feature "the second wake-up signal is associated with a second occasion" includes: The second occasion is used for determining the time domain resource occupied by the second wake-up signal.

As one embodiment, the first occasion and the second occasion occupy different slots respectively.

As one embodiment, the first occasion and the second occasion are respectively associated with different UE IDs.

As one embodiment, the first occasion and the second occasion are respectively associated with different device groups.

As one embodiment, the identity of the first node is a positive integer.

As one embodiment, the identity of the first node is a non-negative integer.

As one embodiment, the first occasion and the second occasion are respectively associated with different POs corresponding to different UEs.

As one embodiment, the identity of the first node is used for determining the first occasion according to the method of Section 7.1 of TS 38.304.

As one embodiment, the identity of the first node is used for determining the first occasion in the following manner:
i_s=floor(UE_ID/N)modNs

Herein, i_s indicates an index of the first occasion, UE_ID corresponds to the identifier of the first node, N represents a quantity of PFs in a DRX cycle, and N_{S} represents a quantity of POs in a PF.

As one embodiment, the identity of the first node is used for determining a time domain resource occupied by the first occasion.

As one embodiment, the identity of the first node is used for determining a slot occupied by the first occasion.

As one embodiment, a position of the time domain resource occupied by the second wake-up signal is related to a position of a time domain resource occupied by the second occasion.

As one sub-embodiment of this embodiment, the position of the time domain resource occupied by the second wake-up signal is used for determining the position of the time domain resource occupied by the second occasion.

As one sub-embodiment of this embodiment, the position of the time domain resource occupied by the second occasion is used for determining the position of the time domain resource occupied by the second wake-up signal.

As one sub-embodiment of this embodiment, the time interval between the position of the time domain resource occupied by the second wake-up signal and the time domain resource occupied by the second occasion is fixed, or is configured through RRC signaling.

Typically, the identity of the first node is used for determining an identifier corresponding to a first device group, and the identifier corresponding to the first device group is used for determining the first wake-up signal; an identifier corresponding to a second device group is used for determining the second wake-up signal; the first device group includes at least one terminal, and the first device group includes the first node; and the second device group includes at least one terminal, and the second device group does not include the first node.

As one embodiment, the first wake-up signal is associated with the first device group, and the first device group includes at least one terminal.

As one sub-embodiment of this embodiment, the first device group includes the first node.

As one embodiment, the second wake-up signal is associated with the second device group, and the second device group includes at least one terminal.

As one sub-embodiment of this embodiment, the second device group does not include the first node.

As one sub-embodiment of this embodiment, the second device group includes the terminal other than the first node.

As one embodiment, the identifier corresponding to the first device group is used for determining the time domain resource occupied by the first wake-up signal.

As one embodiment, the identifier corresponding to the first device group is used for determining a frequency domain resource occupied by the first wake-up signal.

As one embodiment, the identifier corresponding to the second device group is used for determining the time domain resource occupied by the second wake-up signal.

As one embodiment, the identifier corresponding to the second device group is used for determining a frequency domain resource occupied by the second wake-up signal.

### Embodiment 6

Embodiment 6 illustrates a flowchart of target information, as shown in FIG. 6. In FIG. 6, a first node U3 communicates with a second node N4 through a wireless link. It is particularly noted that the order in this embodiment does not limit a signal transmission order and an implementation order in the present application. In the absence of conflict, the embodiments, sub-embodiments, and dependent embodiments in Embodiment 6 may be applied to Embodiment 5. Conversely, in the absence of conflict, any embodiment, sub-embodiment, and dependent embodiment in Embodiment 5 may be applied to Embodiment 6.

For **the first node U3,** the target information is sent in step S30, and channel measurement is performed for a first reference signal in step S31.

For **the second node N4,** the target information is received in step S40, and the first reference signal is sent in step S41.

In Embodiment 6, the target information is used to determine whether the first node supports the measurement performed for the wake-up signal in the target wake-up signal set; the channel measurement performed for the first reference signal is used to determine a second measurement result; a relationship between the second measurement result and a second threshold value, and a relationship between the first measurement result and the first threshold value are used together to determine the first time length; a type of the first reference signal is different from a type of the wake-up signal; and the wake-up signal is used to determine whether to monitor a PDCCH in a corresponding paging occasion, and the first reference signal is not used to determine monitoring of the PDCCH.

As one embodiment, step S31 includes receiving the first reference signal.

As one embodiment, the target information indicates a capability (capability) of the first node device.

As one embodiment, the target information is transmitted through an air interface or a wireless interface.

As one embodiment, the target information is further transmitted via an X2 interface, an Xn interface, or an NG interface.

As one embodiment, the target information is further transmitted between network nodes.

As one embodiment, the target information is received by a network node via an RAN interface and then transmitted to another network node or to a core network.

As one embodiment, the target information is received by a network node via a Uu interface and then transmitted to another network node or to a core network.

As one embodiment, the target information includes a part or all of high-layer signaling or physical layer signaling.

As one embodiment, the target information is earlier than the first information block.

As one embodiment, the target information is later than the first information block.

As one embodiment, the target information includes a part or all of RRC signaling, or the target information includes a part or all of MAC layer signaling.

As one embodiment, the target information is transmitted through a PUSCH (Physical Uplink Shared Channel, physical uplink shared channel) or a PUCCH (Physical Uplink Control Channel, physical uplink control channel).

As one embodiment, the target information is per UE (per UE), or the target information is per feature set (per feature set), or the target information is per band (per band), or the target information is per band combination (per band combination), or the target information is per band list (per band list), or the target information is per frequency range (per frequency range), or the target information is per duplex mode (per duplex mode).

As one embodiment, the target information is related to a frequency range.

As one embodiment, the target information is related to a duplex mode (TDD or FDD).

As one embodiment, the target information includes a part or all of UE-NR-Capability IE.

As one embodiment, the target information includes a part or all of "UE-RadioPagingInfo".

As one embodiment, the target information includes a part or all of "UERadioPagingInformation".

As one embodiment, the target information includes a part or all of "UE-NR-Capability-v1900".

As one embodiment, the target information includes a part or all of "LPWUS-Parameters-v1900".

As one embodiment, the target information includes a part or all of "lpwus-SubgroupingSupportBandList-r19".

As one embodiment, the target information indicates a UE capability required for paging.

As one embodiment, a quantity of frequency bands indicated by the target information is not greater than 1024.

As one embodiment, the target information further indicates a parameter value of a receiver supported by the first node device.

As one embodiment, the target information further indicates a type of a receiver supported by the first node device.

As one embodiment, the target information further indicates a reception parameter value of a wake-up signal supported by the first node device.

As one embodiment, the target information further indicates at least one configuration parameter value of a wake-up signal supported by the first node device.

As one embodiment, a unit of the second threshold value is dB.

As one embodiment, a unit of the second threshold value is dBm.

As one embodiment, a unit of the second threshold value is mW.

As one embodiment, the first information block indicates the second threshold value.

As one embodiment, the first information block explicitly indicates the second threshold value.

As one embodiment, the first information block implicitly indicates the second threshold value.

As one embodiment, the first information block indicates a given value, and the target value is used to determine the second threshold value.

As one embodiment, the second measurement result is used for cell selection.

As one embodiment, the second measurement result includes a measurement value of a serving cell.

As one embodiment, the second measurement result includes an RSSI.

As one embodiment, the second measurement result includes energy.

As one embodiment, the second measurement result includes an RSRP.

As one embodiment, the second measurement result includes dBm.

As one embodiment, the second measurement result is filtered to generate a layer-3 measurement result.

As one embodiment, the second measurement result includes a cell selection receive level value (Cell Selection RX Level Value).

As one embodiment, the second measurement result includes a cell selection quality value (Cell Selection Quality Value).

As one embodiment, the first reference signal includes an SS (Synchronization Signal, synchronization signal).

As one embodiment, the first reference signal includes an SSB (Synchronization Signal/physical broadcast channel Block, synchronization signal/physical broadcast channel block).

As one embodiment, the first reference signal includes a CSI-RS (Channel State Information Reference Signal, channel state information reference signal).

As one embodiment, when the second measurement result is greater than the second threshold value and the relationship between the first measurement result and the first threshold value corresponds to the first relationship, the first time length is equal to the first value; otherwise, the first time length is equal to the second value.

As one embodiment, when a difference obtained by subtracting the second measurement result from a second reference value is less than the second threshold value and the relationship between the first measurement result and the first threshold value corresponds to the first relationship, the first time length is equal to the first value; otherwise, the first time length is equal to the second value.

As one sub-embodiment of this embodiment, the second reference value is configured through RRC signaling.

As one sub-embodiment of this embodiment, the second reference value is fixed.

As one embodiment, the first reference signal is further used for layer-1 measurement, and the wake-up signal is not used for layer-1 measurement.

As one embodiment, the first reference signal is further used for CSI measurement, and the wake-up signal is not used for layer CSI measurement.

As one embodiment, the first reference signal is further used for CQI measurement, and the wake-up signal is not used for layer CQI measurement.

As one embodiment, the first threshold value is related to a capability of the first node.

As one embodiment, the second threshold value is related to a capability of the first node.

As one embodiment, the first threshold value is related to a Category of the first node.

As one embodiment, the second threshold value is related to a Category of the first node.

As one embodiment, the first threshold value is specific to the first node.

As one embodiment, the second threshold value is specific to the first node.

As one embodiment, the first threshold value is specific to a first device group, and the first device group includes the first node.

As one embodiment, the second threshold value is specific to a first device group, and the first device group includes the first node.

As one embodiment, the first threshold value is configured through RRC signaling.

As one sub-embodiment of this embodiment, the RRC signaling is UE-specific.

As one embodiment, the second threshold value is configured through RRC signaling.

As one sub-embodiment of this embodiment, the RRC signaling is UE-specific (UE-specific).

As one embodiment, step S30 is before step S10 in Embodiment 5.

As one embodiment, step S40 is before step S20 in Embodiment 5.

As one embodiment, step S31 is before step S10 in Embodiment 5.

As one embodiment, step S41 is before step S20 in Embodiment 5.

As one embodiment, step S31 is after step S10 and before step S11 in Embodiment 5.

As one embodiment, step S41 is after step S20 and before step S21 in Embodiment 5.

As one embodiment, step S31 is after step S11 in Embodiment 5.

As one embodiment, step S41 is after step S21 in Embodiment 5.

### Embodiment 7

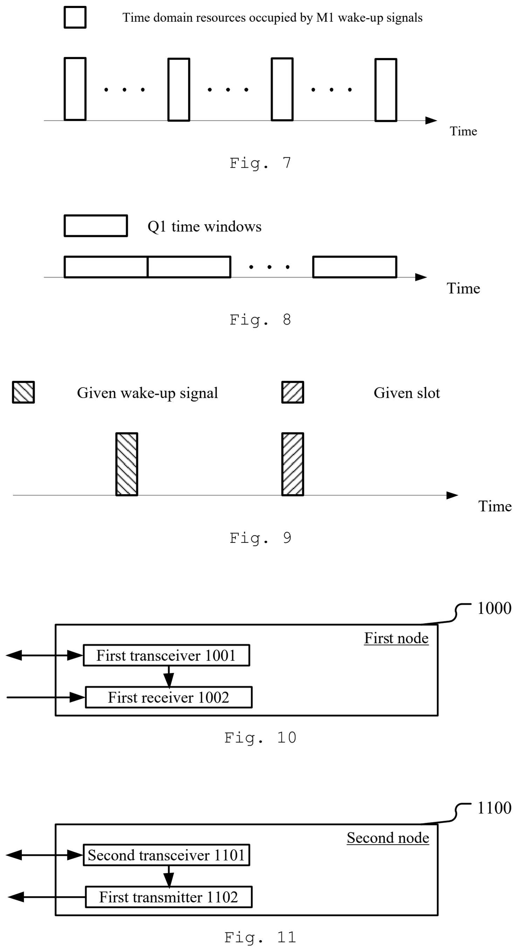

Embodiment 7 illustrates a schematic diagram of a target wake-up signal set, as shown in FIG. 7. In FIG. 7, the target wake-up signal set includes M1 wake-up signals, and the M1 is a positive integer greater than 1.

As one embodiment, the M1 wake-up signals correspond to M1 POs respectively.

As one embodiment, the M1 wake-up signals correspond to M1 LP WUSs respectively.

As one embodiment, there is at least one signal having a synchronization function in the M1 wake-up signals.

As one embodiment, any one wake-up signal in the M1 wake-up signals has a synchronization function.

### Embodiment 8

Embodiment 8 illustrates a schematic diagram of a first time length, as shown in FIG. 8. In FIG. 8, a time length corresponding to any one time window in Q1 time windows shown in the figure is equal to the first time length.

As one embodiment, the first node is required to complete at least once measurement for receiving of a serving cell in any one time window in the Q1 time windows.

As one embodiment, the first node is required to complete at least once measurement for receiving of a neighboring cell in any one time window in the Q1 time windows.

As one embodiment, the first node is required to determine, in any one time window in the Q1 time windows, a filtered value for a serving cell that is for results of at least two times of measurement.

As one embodiment, the first node is required to determine, in any one time window in the Q1 time windows, a filtered value for a neighboring cell that is for results of at least two times of measurement.

### Embodiment 9

Embodiment 9 illustrates a schematic diagram of a given wake-up signal, as shown in FIG. 9. In FIG. 9, the given wake-up signal corresponds to a given occasion; and the given wake-up signal is the first wake-up signal and the given occasion is the first occasion, or the given wake-up signal is the second wake-up signal and the given occasion is the second occasion.

As one embodiment, the given wake-up signal is one of K1 wake-up signals included in the target wake-up signal set.

As one embodiment, the given wake-up signal is used to determine the given occasion.

As one embodiment, a position of a time domain resource occupied by the given wake-up signal is used to determine a position of a time domain resource occupied by the given occasion.

As one embodiment, a time domain position of a slot occupied by the given wake-up signal is used to determine a time domain position of a slot occupied by the given occasion.

As one embodiment, a time interval between the given wake-up signal and the given occasion is fixed.

As one embodiment, a time interval between the given wake-up signal and the given occasion is configured through high-layer signaling.

As one embodiment, a time interval between the slot occupied by the given wake-up signal and the slot occupied by the given occasion is fixed.

As one embodiment, a time interval between the slot occupied by the given wake-up signal and the slot occupied by the given occasion is configured through high-layer signaling.

### Embodiment 10

Embodiment 10 illustrates a structural block diagram in a first node, as shown in FIG. 10. In FIG. 10, a first node 1000 includes a first transceiver 1001 and a first receiver 1002.

The first transceiver 1001 receives a first information block, the first information block being used to determine the first threshold value; and
the first receiver 1002 performs first-type measurement for a wake-up signal in a target wake-up signal set, the target wake-up signal set including at least one wake-up signal.

In Embodiment 10, the first-type measurement performed for the wake-up signal in the target wake-up signal set is used to determine a first measurement result, and a relationship between the first measurement result and the first threshold value is used to determine a first time length; the first node performs at least once second-type measurement in a time interval equal to the first time length, and the first-type measurement is different from the second-type measurement; and the first time length is related to SMTC of a first node.

As one embodiment, the first time length is equal to a positive integer time of a length of a DRX cycle, and the length of the DRX cycle is used to determine at least one wake-up signal included in the target wake-up signal set.

As one embodiment, when a relationship between the first measurement result and the first threshold value corresponds to a first relationship, the first time length is equal to a first value; or when a relationship between the first measurement result and the first threshold value corresponds to a second relationship, the first time length is equal to a second value; and the first value is different from the second value; both the first value and the second value are related to the SMTC of the first node; and the first value is K1 times the second value, K1 is a positive integer greater than 1, and a value of the K1 is fixed, or a value of the K1 is configured through high-level signaling.

As one embodiment, the following is included:
the first transceiver 1001, sending target information; and
the first receiver 1002, performing channel measurement on a first reference signal,
the target information is used to determine whether the first node supports the measurement performed for the wake-up signal in the target wake-up signal set; the channel measurement performed for the first reference signal is used to determine a second measurement result; a relationship between the second measurement result and a second threshold value, and the relationship between the first measurement result and the first threshold value, are used together to determine the first time length; a type of the first reference signal is different from a type of the wake-up signal; and the wake-up signal is used to determine whether to monitor a PDCCH in a corresponding paging occasion, and the first reference signal is not used to determine monitoring of the PDCCH.

As one embodiment, the first measurement result includes an RSSI, and the second measurement result includes at least one of RSRP or RSRQ.

As one embodiment, the target wake-up signal set includes a first wake-up signal and a second wake-up signal; an identity of the first node is used to determine a first occasion, and the first wake-up signal is used by the first node to determine whether to monitor the PDCCH in the first occasion; and the second wake-up signal is associated with a second occasion, and the first occasion is different from the second occasion.

As one embodiment, the identity of the first node is used for determining an identifier corresponding to a first device group, and the identifier corresponding to the first device group is used for determining the first wake-up signal; an identifier corresponding to a second device group is used for determining the second wake-up signal; the first device group includes at least one terminal, and the first device group includes the first node; and the second device group includes at least one terminal, and the second device group does not include the first node.

As one embodiment, the first transceiver 1001 includes at least the first six of the antenna 452, the transmitter/receiver 454, the multi-antenna transmit processor 457, the multi-antenna receive processor 458, the transmit processor 468, the receive processor 456, and the controller/processor 459 in Embodiment 4.

As one embodiment, the first receiver 1002 includes at least the first four of the antenna 452, the receiver 454, the multi-antenna receive processor 458, the receive processor 456, and the controller/processor 459 in Embodiment 4.

### Embodiment 11

Embodiment 11 illustrates a structural block diagram in a second node, as shown in FIG. 11. In FIG. 11, a second node 1100 includes a second transceiver 1101 and a first transmitter 1102.

The second transceiver 1101 sends a first information block, the first information block being used to determine a first threshold value; and
the first transmitter 1102 sends at least one wake-up signal included in a target wake-up signal set, a recipient of the first information block performing measurement for the at least one wake-up signal in the target wake-up signal set.

In Embodiment 11, the first-type measurement performed for the wake-up signal in the target wake-up signal set is used to determine a first measurement result, and a relationship between the first measurement result and the first threshold value is used to determine a first time length; the recipient of the first information block performs at least once second-type measurement in a time interval equal to the first time length, and the first-type measurement is different from the second-type measurement; and the first time length is related to SMTC of a first node.

As one embodiment, the first time length is equal to a positive integer time of a length of a DRX cycle, and the length of the DRX cycle is used to determine at least one wake-up signal included in the target wake-up signal set.

As one embodiment, when a relationship between the first measurement result and the first threshold value corresponds to a first relationship, the first time length is equal to a first value; or when the relationship between the first measurement result and the first threshold value corresponds to a second relationship, the first time length is equal to a second value; and the first value is different from the second value; both the first value and the second value are related to the SMTC of the first node; and the first value is K1 times the second value, K1 is a positive integer greater than 1, and a value of the K1 is fixed, or a value of the K1 is configured through high-level signaling.

As one embodiment, the following is included:
the second transceiver 1101, receiving target information; and
the first transmitter 1102, sending a first reference signal,
a sender of the target information performs channel measurement for the first reference signal; the target information is used to determine whether the sender of the target information supports the measurement performed for the wake-up signal in the target wake-up signal set; the channel measurement performed for the first reference signal is used to determine a second measurement result; a relationship between the second measurement result and a second threshold value, and the relationship between the first measurement result and the first threshold value, are used together to determine the first time length; a type of the first reference signal is different from a type of the wake-up signal; and the wake-up signal is used to determine whether to monitor a PDCCH in a corresponding paging occasion, and the first reference signal is not used to determine monitoring of the PDCCH.

As one embodiment, the first measurement result includes an RSSI, and the second measurement result includes at least one of RSRP or RSRQ.

As one embodiment, the target wake-up signal set includes a first wake-up signal and a second wake-up signal; a recipient of the first information block includes the first node; an identity of the first node is used to determine a first occasion, and the first wake-up signal is used by the first node to determine whether to monitor the PDCCH in the first occasion; and the second wake-up signal is associated with a second occasion, and the first occasion is different from the second occasion.

As one embodiment, the recipient of the first information block includes the first node; the identity of the first node is used to determine an identifier corresponding to a first device group, and the identifier corresponding to the first device group is used to determine the first wake-up signal; an identifier corresponding to a second device group is used for determining the second wake-up signal; the first device group includes at least one terminal, and the first device group includes the first node; and the second device group includes at least one terminal, and the second device group does not include the first node.

As one embodiment, the second transceiver 1101 includes at least the first six of the antenna 420, the receiver/transmitter 418, the multi-antenna receive processor 472, the receive processor 470, the multi-antenna transmit processor 471, the transmit processor 414, and the controller/processor 475 in Embodiment 4.

As one embodiment, the first transmitter 1102 includes at least the first four of the antenna 420, the transmitter 418, the multi-antenna transmit processor 471, the transmit processor 414, and the controller/processor 475 in Embodiment 4.

A person skilled in the art may understand that a part or all of the steps in the foregoing methods may be completed by instructing relevant hardware through a program, and the program may be stored in a computer-readable storage medium, for example, a read-only memory, a hard disk, or an optical disk. Optionally, a part or all of the steps in the foregoing embodiments may alternatively be implemented by using one or more integrated circuits. Accordingly, each module unit in the foregoing embodiments may be implemented in a form of hardware or in a form of software functional modules. The present application is not limited to any specific form of software and hardware combination. The first node in the present application includes but is not limited to a mobile phone, a tablet computer, a notebook, an Internet card, a low-power device, an eMTC device, an NB-IoT device, in-vehicle communication equipment, a transportation tool, a vehicle, an RSU (Road Side Unit, road side unit), aircraft, an airplane, a drone, remote-controlled aircraft, and another wireless communication device. The second node in the present application includes but is not limited to a macrocell base station, a microcell base station, a small cell base station, a home base station, a relay base station, an eNB, a gNB, a transmission and reception node TRP, a GNSS (Global Navigation Satellite System, global navigation satellite system), a relay satellite, a satellite base station, an air base station, an RSU, a drone, test device, for example, a transceiver or a signaling tester that simulates some functions of a base station, and another wireless communication device.

A person skilled in the art should understand that the present invention may be implemented in another specified form without departing from its core or basic features. Therefore, embodiments disclosed at present should be considered as illustrative rather than restrictive in any way. The scope of the invention is determined by the appended claims rather than the foregoing description, and all changes within the equivalent meaning and area thereof are considered to be included therein.

## Claims

1. A first node used in wireless communication, comprising:
a first transceiver for receiving a first information block, the first information block being used for determining a first threshold value; and
a first receiver for performing a first-type measurement on a wake-up signal in a target wake-up signal set, the target wake-up signal set comprising at least one wake-up signal,
wherein the first-type measurement performed for the wake-up signal in the target wake-up signal set is used for determining a first measurement result, and a relationship between the first measurement result and the first threshold value is used for determining a first time length; in a time interval of which the length is equal to the first time length, the first node at least performs a second-type measurement once, the first-type measurement and the second-type measurement being different; and the first time length is related to SMTC of the first node.

2. The first node according to claim 1, wherein the first time length is equal to a positive integer time of a DRX cycle length, and the DRX cycle length is used for determining at least one wake-up signal comprised in the target wake-up signal set.

3. The first node according to claim 1 or 2, wherein when the relationship between the first measurement result and the first threshold value corresponds to a first relationship, the first time length is equal to a first value; or when the relationship between the first measurement result and the first threshold value corresponds to a second relationship, the first time length is equal to a second value; the first value is different from the second value; both the first value and the second value are related to the SMTC of the first node; and the first value is K1 times the second value, K1 is a positive integer greater than 1, and a value of the K1 is fixed, or a value of the K1 is configured through high-level signaling.

4. The first node according to any one of claims 1 to 3, comprising:
the first transceiver for sending target information; and
the first receiver for performing a channel measurement for a first reference signal,
wherein the target information is used for determining that the first node supports the measurement performed for the wake-up signal in the target wake-up signal set; the channel measurement performed for the first reference signal is used for determining a second measurement result; a relationship between the second measurement result and a second threshold value and the relationship between the first measurement result and the first threshold value are used together for determining the first time length; a type of the first reference signal is different from a type of the wake-up signal; and the wake-up signal is used for determining whether to monitor a PDCCH in a corresponding paging occasion, and the first reference signal is not used for determining to monitor the PDCCH.

5. The first node according to claim 4, wherein the first measurement result comprises an RSSI, and the second measurement result comprises at least one of RSRP or RSRQ.

6. The first node according to any one of claims 1 to 5, wherein the target wake-up signal set comprises a first wake-up signal and a second wake-up signal; an identity of the first node is used for determining a first occasion, and the first wake-up signal is used by the first node for determining whether to monitor the PDCCH in the first occasion; and the second wake-up signal is associated with a second occasion, and the first occasion and the second occasion are different.

7. The first node according to claim 6, wherein the identity of the first node is used for determining an identifier corresponding to a first device group, and the identifier corresponding to the first device group is used for determining the first wake-up signal; an identifier corresponding to a second device group is used for determining the second wake-up signal; the first device group comprises at least one terminal, and the first device group comprises the first node; and the second device group comprises at least one terminal, and the second device group does not comprise the first node.

8. A second node used in wireless communication, comprising:
a second transceiver for sending a first information block, the first information block being used for determining a first threshold value; and
a first transmitter for sending at least one wake-up signal comprised in a target wake-up signal set, a recipient of the first information block performing measurements for the at least one wake-up signal in the target wake-up signal set,
wherein the first-type measurement performed for the wake-up signal in the target wake-up signal set is used for determining a first measurement result, and a relationship between the first measurement result and the first threshold value is used for determining a first time length; in a time interval of which the length is equal to the first time length, the recipient of the first information block at least performs a second-type measurement once, the first-type measurement and the second-type measurement being different; and the first time length is related to SMTC of the first node.

9. A method used in a first node for wireless communication, comprising:
receiving a first information block, the first information block being used for determining a first threshold value; and
performing a first-type measurement for a wake-up signal in a target wake-up signal set, the target wake-up signal set comprising at least one wake-up signal,
wherein the first-type measurement performed for the wake-up signal in the target wake-up signal set is used for determining a first measurement result, and a relationship between the first measurement result and the first threshold value is used for determining a first time length; in a time interval of which the length is equal to the first time length, the first node at least performs a second-type measurement once, the first-type measurement and the second-type measurement being different; and the first time length is related to SMTC of the first node.

10. A method used in a second node for wireless communication, comprising:
sending a first information block, the first information block being used for determining a first threshold value; and
sending at least one wake-up signal comprised in a target wake-up signal set, a recipient of the first information block performing measurements for the at least one wake-up signal comprised in the target wake-up signal set,
wherein the first-type measurement performed for the wake-up signal in the target wake-up signal set is used for determining a first measurement result, and a relationship between the first measurement result and the first threshold value is used for determining a first time length; in a time interval of which the length is equal to the first time length, the recipient of the first information block at least performs a second-type measurement once, the first-type measurement and the second-type measurement being different; and the first time length is related to SMTC of the first node.
